# EUROPEAN PATENT APPLICATION

(11) **EP 4 299 482 A1**
(43) Date of publication of application: **03.01.2024**
(21) Application number: 22775421.5
(22) Date of filing: 17.03.2022
(51) Int. Cl.: B65G 33/14, B65G 65/46

(54) **POWDER SUPPLY DEVICE**

(30) Priority: 26.03.2021 JP 2021054137
(71) Applicant: FUJIFILM Corporation, Tokyo 106-8620 (JP)
(72) Inventor: ISHIKAWA, Keiichi, Ashigarakami-gun, Kanagawa 258-8577 (JP); URABE, Takashi, Ashigarakami-gun, Kanagawa 258-8577 (JP)
(74) Representative: Hoffmann Eitle
(86) International application number: PCT/JP2022/012437
(87) International publication number: WO 2022/202633

(57) **Abstract**

A powder supply device includes: a hopper that stores powder; a tubular chute that extends in an axial direction, includes one end connected to a lower end of the hopper, and discharges the powder supplied from the hopper from a discharge port provided at an opposite end thereof; an auger screw that is rotatably provided in the chute and includes a helical blade for transporting the powder toward the discharge port; and at least one strip-shaped portion which is provided on an inner wall surface of the chute and has an elongated recessed or protruding shape and of which a longitudinal direction extends in a direction intersecting with at least a part of the blade.

## Description

### BACKGROUND OF THE INVENTION

### 1. Field of the Invention

A technique of the present disclosure relates to a powder supply device.

### 2. Description of the Related Art

A powder supply device that supplies powder toward a container in order to fill the container with powder including granules and the like is known. Powder, which is supplied using such a powder supply device, includes a porous material having a low bulk density. Examples of the porous material having a low bulk density include a biocompatible polymer, such as collagen or gelatin. Such powder is useful as a material for cell scaffolds, a member for transplantation, or the like, and is a very expensive material. For this reason, in a powder supply device using such powder, it is preferable to stabilize the amount of powder transported toward the container per unit time so that a variation in the amount of powder with which each container is filled is reduced. Therefore, for example, a powder supply device using an auger screw, which is likely to stabilize the amount of powder transported per unit time, is known as such a powder supply device (for example, see JP2017-100791A and JP2018-43813A).

As disclosed in JP2017-100791A and JP2018-43813A, a powder supply device using an auger screw comprises a hopper in which powder is stored, a chute of which an upper end is connected to a lower end of the hopper and which discharges the powder supplied from the hopper from a discharge port provided at a lower end thereof, and an auger screw that is rotatably provided in the chute and includes a helical blade for transporting the powder toward the discharge port.

The powder supply device disclosed in JP2017-100791A includes a measurer that measures the amount of powder with which a container is filled, feeds back the measured amount of filling powder to adjust the amount of powder to be transported, and makes the mass of the powder and a filling time be in certain ranges.

The powder supply device disclosed in JP2018-43813A comprises a groove that is formed on an inner peripheral surface of a cylindrical chute provided at a lower portion of the hopper and is formed in a helical shape along a blade of the auger screw. In this powder supply device, the moving direction of the powder, which is powder, is guided by the helical groove, so that the powder is carried to the lower side of the chute.

### SUMMARY OF THE INVENTION

However, in a case where powder is transported by the auger screw, it has been found that the amount of powder transported per unit time may not be stable due to the co-rotation of the auger screw and the powder. The co-rotation of the auger screw means that charged powder is attracted to the blade of the auger screw due to charging and is rotated together with the blade in a state where the powder is fixed to the blade. Since the powder is not transported to the lower side of the chute in a case where the powder is rotated together with the auger screw, the powder stays in the chute. In a case where the powder stays in the chute, the amount of powder transported per unit time by the auger screw is not stable, which causes a variation in the amount of powder with which each container is filled. In particular, powder having a low bulk density, such as a porous material, is likely to be attracted due to charging since being light. For this reason, a solution has been desired.

The powder supply device disclosed in JP2018-43813A comprises the groove that is formed on the inner peripheral surface of the chute and is formed in a helical shape along the blade of the auger screw. However, since powder attracted to the blade of the auger screw due to charging is rotated along the groove together with the blade in this configuration, it is difficult to eliminate the attraction of the powder caused by charging and to solve a phenomenon in which the powder is rotated together with the auger screw. For this reason, the amount of powder to be transported per unit time may not be stable.

The present disclosure has been made in consideration of the above-mentioned circumstances, and an object of the present disclosure is to provide a powder supply device that can stabilize the amount of powder transported per unit time as compared to the related art.

A powder supply device according to an aspect of the present disclosure comprises: a hopper that stores powder; a tubular chute that extends in an axial direction, includes one end connected to a lower end of the hopper, and discharges the powder supplied from the hopper from a discharge port provided at an opposite end thereof; an auger screw that is rotatably provided in the chute and includes a helical blade for transporting the powder toward the discharge port; and at least one strip-shaped portion which is provided on an inner wall surface of the chute and has an elongated recessed or protruding shape and of which a longitudinal direction extends in a direction intersecting with at least a part of the blade.

In the powder supply device according to the aspect, a plurality of the strip-shaped portions may be provided.

Further, in the powder supply device according to the aspect, the plurality of strip-shaped portions may include at least one of recessed groove portions or protruding ridge portions.

Furthermore, in the powder supply device according to the aspect, the strip-shaped portion may be provided along the axial direction of the chute.

Moreover, in the powder supply device according to the aspect, the at least one strip-shaped portion may be provided over an entire area of the chute in the axial direction.

Further, in the powder supply device according to the aspect, the strip-shaped portion may include at least one of a linear strip-shaped portion or a curved strip-shaped portion.

Furthermore, in the powder supply device according to the aspect, in a case where the strip-shaped portion is a recessed groove portion, a depth of the groove portion may be equal to or more than 0.1 times and equal to or less than 0.5 times an average particle diameter of the powder.

Moreover, in the powder supply device according to the aspect, in a case where the strip-shaped portion is a recessed groove portion, a width of the groove portion in a direction orthogonal to a longitudinal direction of the groove portion may be equal to or more than 2 times an average particle diameter of the powder.

Further, the powder supply device according to the aspect may further comprise a tubular nozzle that is connected to the discharge port of the chute, and a material of the nozzle or a material for surface coating of the nozzle may be a material that is less likely to cause electrostatic induction with respect to the powder than a material of the chute.

Furthermore, in the powder supply device according to the aspect, surface resistivity of the material of the nozzle or the material for the surface coating may be 10⁵ Ω or more.

Moreover, the powder supply device according to the aspect may further comprise a static eliminator that eliminates static electricity from the nozzle.

Further, in the powder supply device according to the aspect, frictional resistance of a surface of the blade of the auger screw may be lower than frictional resistance of the inner wall surface of the chute.

Furthermore, the powder supply device according to the aspect may further comprise: a drive unit that rotationally drives the auger screw; a measuring unit that measures an amount of the powder which is discharged from the discharge port and with which a container is filled; and a controller that controls the drive unit according to the amount of the filling powder measured by the measuring unit.

Moreover, in the powder supply device according to the aspect, a measured value obtained during filling, which is output from the measuring unit, may be fed back to the controller and a rotational speed of the auger screw may be reduced or the auger screw may be stopped.

According to the technique of the present disclosure, the amount of powder transported per unit time can be stabilized as compared to the related art where there is no strip-shaped portion of which the longitudinal direction extends in a direction intersecting with the blade of the auger screw.

### BRIEF DESCRIPTION OF THE DRAWINGS

Fig. 1 is a cross-sectional view showing the overall configuration of a powder supply device according to a first embodiment.
Fig. 2 is a cross-sectional view showing the vicinity of a hopper and a chute of the powder supply device according to the first embodiment.
Fig. 3 is a front view showing an auger screw of the powder supply device according to the first embodiment.
Fig. 4 is a front view showing the auger screw and the chute of the powder supply device according to the first embodiment.
Fig. 5 is a cross-sectional view taken along line 5-5 of Fig. 1.
Fig. 6 is a cross-sectional view showing a state where a part of the chute and the auger screw are enlarged in the powder supply device shown in Fig. 5.
Fig. 7 is a cross-sectional view showing a state where a part of the chute of the powder supply device is viewed from the inside.
Fig. 8A is a schematic cross-sectional view showing a state where powder enters a recessed strip-shaped portion of the chute, and Fig. 8B is a schematic cross-sectional view showing a state where powder is caught by the recessed strip-shaped portion of the chute and powder is separated from a position where the powder is attracted to the auger screw.
Fig. 9 is a cross-sectional view showing the overall configuration of a powder supply device according to a second embodiment.
Fig. 10 is a cross-sectional view showing a state where a part of a chute of a powder supply device according to a third embodiment is viewed from the inside.
Fig. 11 is a front view showing a part of a chute and an auger screw of a powder supply device according to a fourth embodiment.
Fig. 12 is a front view showing a part of a chute and an auger screw of a powder supply device according to a fifth embodiment.

### DESCRIPTION OF THE PREFERRED EMBODIMENTS

Embodiments for carrying out a technology of the present disclosure will be described below. In the following description, a side indicated by an arrow UP, which is appropriately shown in the drawings, will be defined as an upper side of a device in a vertical direction. Further, since a ratio of each member to powder is appropriately changed in each drawing to make it easier to understand the configuration of the powder supply device, an actual ratio of each member to powder is not necessarily reflected.

### [First Embodiment]

### (Overall configuration of powder supply device)

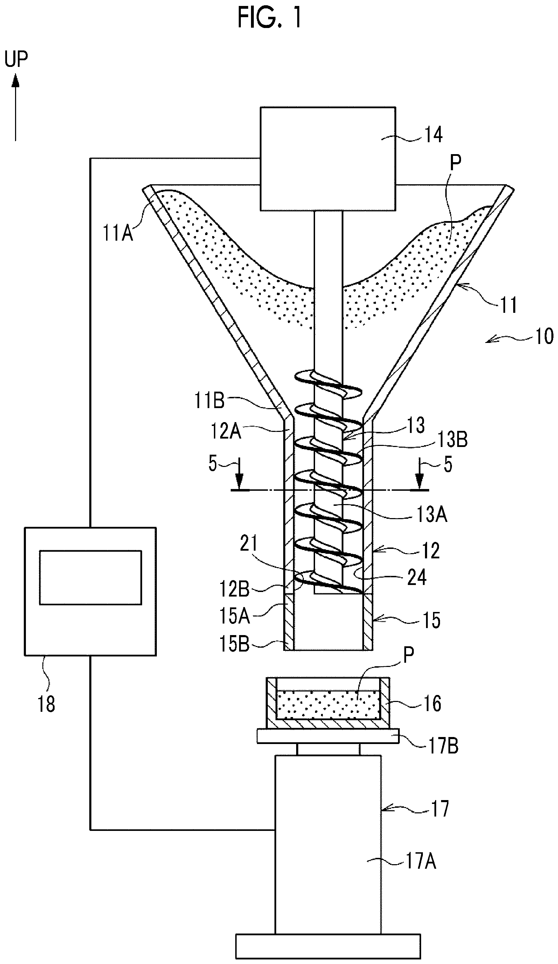

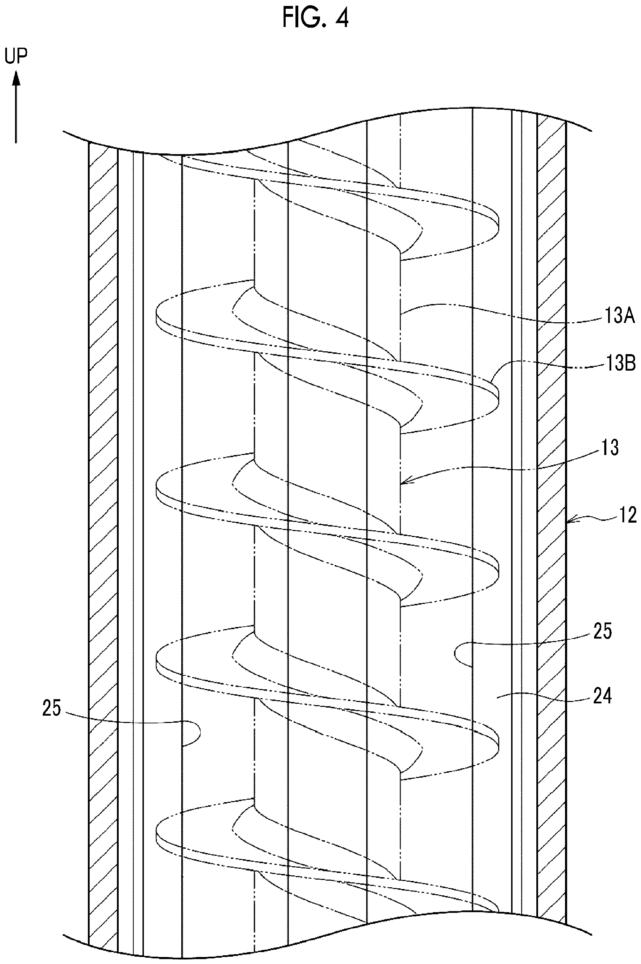

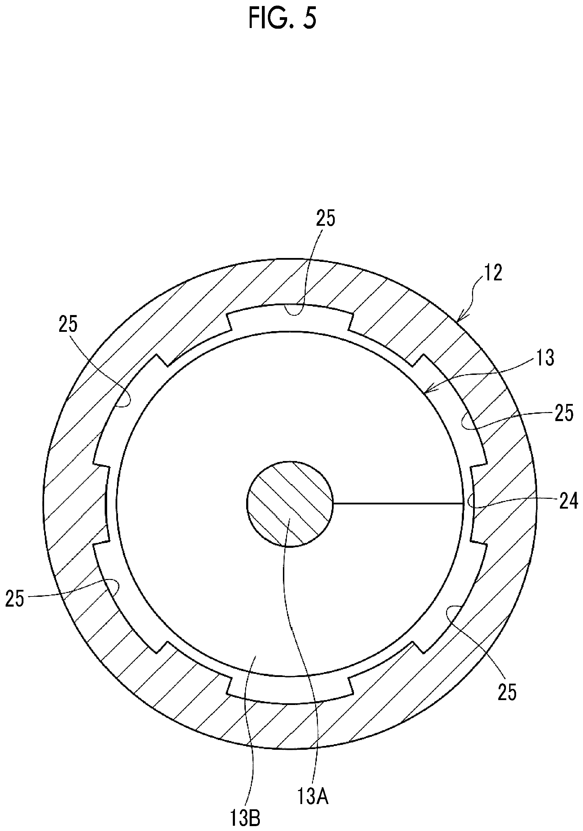

An example of a powder supply device 10 according to a first embodiment is shown in Fig. 1. As shown in Fig. 1, the powder supply device 10 comprises a hopper 11 that stores powder P, a tubular chute 12 that is connected to a lower end of the hopper 11, and an auger screw 13 that is rotatably provided in the chute 12. Further, the powder supply device 10 comprises a drive unit 14 that rotationally drives the auger screw 13, and a nozzle 15 that is provided at a distal end of the chute 12. Furthermore, strip-shaped portions 25 (see Figs. 4 and 5) having an elongated recessed or protruding shape are provided on an inner wall surface 24 of the chute 12.

Further, the powder supply device 10 comprises a container 16 that is filled with the powder P discharged from the nozzle 15. Furthermore, the powder supply device 10 comprises a measuring unit 17 that measures the amount of powder P with which the container 16 is filled, and a controller 18 that controls the drive unit 14 according to the amount of filling powder P measured by the measuring unit 17.

### (Powder)

The powder P supplied by the powder supply device 10 also includes granules and the like in addition to powder. The powder P includes a porous material having a low bulk density, and the like. Examples of the porous material having a low bulk density include a biocompatible polymer, such as collagen or gelatin. The average particle diameter of such powder P is 0.3 mm or more and 3.0 mm or less. The average particle diameter of the powder P of this example is, for example, about 1 mm. An average particle diameter can be obtained using an image analysis method based on JISZ 8827-1. Specifically, particles dispersed on a stage are imaged and a two-dimensional projection image is acquired to calculate an equivalent circle diameter of the particle. An arithmetic mean value of equivalent circle diameters of all the imaged particles is taken. The arithmetic mean value can be measured using, for example, Morphologi G3 that is a particle image analyzer manufactured by Malvern Panalytical Ltd.

For example, a polymer aqueous solution containing a polymer is adjusted, is put in a liquid container, and is cooled and frozen, water is removed from the polymer aqueous solution, and a material obtained from the polymer aqueous solution after the removal of water are pulverized and classified, so that a porous polymer material can be obtained. An example of the porous material will be described below. A numerical range described using "to" in this specification means a range that includes numerical values written in the front and rear of "to" as a lower limit and an upper limit, and a case where a unit is given to only the upper limit of the numerical range means that the same unit is applied to the entire numerical range.

### (Polymer)

In the present disclosure, the term "polymer" refers to a molecule having a large molecular weight and having a structure in which a unit obtained substantially or conceptually from a molecule having a small molecular weight is repeated many times. Examples of the polymer include polyamine, cellulose, amylose, starch, chitin, polypeptide, protein, DNA, RNA, and the like. The polymer is preferably water-soluble, and is more preferably a polypeptide or protein. Collagen and gelatin are particularly preferable among polypeptides and proteins.

A ratio of hydrophilic repeating units in the polymer is preferably 50% or less and more preferably 30% or less. In a case where a ratio of hydrophilic units is higher than this ratio, the amount of free water around the polymer is reduced and freezing is inhibited. Here, the ratio of hydrophilic repeating units refers to a ratio of repeating units including an ionic group and/or a hydroxyl group in the polymer.

The gelatin means a polypeptide containing 6 or more consecutive sequences each of which is represented by Gly-X-Y, and may contain one or more other amino acid residues in the polypeptide other than the sequence represented by Gly-X-Y The sequence represented by Gly-X-Y is a sequence corresponding to an amino acid sequence derived from a partial amino acid sequence of collagen, and the repetition of this sequence means a sequence characteristic of collagen.

The plurality of Gly-X-Y sequences may be the same or different from each other. Further, X and Y in the Gly-X-Y sequence are independent for each repeating unit, and may be the same or different from each other. In Gly-X-Y, Gly represents a glycine residue and X and Y represent arbitrary amino acid residues other than the glycine residue. It is preferable that X and Y contain a large amount of iminoic acid residues, that is, proline residues or oxyproline residues. It is preferable that the content of such imino acid residue is in a range of 10% to 45% of the entire gelatin. The content of Gly-X-Y in the gelatin is preferably 80% or more, more preferably 95% or more, and most preferably 99% or more of the entire gelatin.

The gelatin may be natural gelatin or may be mutant gelatin of which at least one amino acid residue is different from that of natural gelatin. The natural gelatin means gelatin that is made from naturally occurring collagen or a polypeptide that contains the same amino acid sequence as gelatin made from naturally occurring collagen. Unless otherwise noted, in the present disclosure, mutant or recombinant gelatin will be collectively referred to as recombinant gelatin. Examples of the natural gelatin or the recombinant gelatin thereof include gelatin derived from animals, such as fish and mammals, and it is more preferable that the natural gelatin or the recombinant gelatin thereof is the natural gelatin of a mammal or the recombinant gelatin thereof. Examples of the mammal include a human, a horse, a pig, a mouse, a rat, and the like, and it is more preferable that the mammal is a human or a pig. It is preferable that the natural gelatin is gelatin derived from a pig or a human, and it is preferable that the recombinant gelatin is recombinant gelatin derived from a human.

Further, it is preferable that the gelatin is recombinant gelatin obtained in a case where a base sequence or an amino acid sequence, which is obtained from the modification of one or more bases or amino acid residues that is applied to a base sequence or an amino acid sequence of a gene encoding the collagen containing 6 or more consecutive sequences, each of which is represented by Gly-X-Y, is introduced into an appropriate host and expressed by an ordinary method. In a case where such recombinant gelatin is used, (bone) tissue repair ability is improved and various properties can be expressed as compared to a case where natural gelatin is used. For example, there is an advantage of avoiding an unfavorable influence, such as rejection from a living body.

For example, recombinant gelatin disclosed in EP1014176A, US6992172A, WO2004/85473A, WO2008/103041A, JP2010-519293A, JP2010-519252A, JP2010-518833A, JP2010-519251A, WO2010/128672A, WO2010/147109A, and the like can be particularly preferably used as the recombinant gelatin. Further, the recombinant gelatin has a molecular weight of preferably 2 kDa or more and 100 kDa or less, more preferably 5 kDa or more and 90 kDa or less, and still more preferably 10 kDa or more and 90 kDa or less.

In terms of biocompatibility, it is preferable that the recombinant gelatin further includes cell adhesion signals and it is more preferable that the recombinant gelatin includes two or more cell adhesion signals per molecule. Examples of such the cell adhesion signal can include the respective sequences, such as RGD sequences, LDV sequences, REDV sequences, YIGSR sequences, PDSGR sequences, RYVVLPR sequences, LGTIPG sequences, RNIAEIIKDI sequences, IKVAV sequences, LRE sequences, DGEA sequences, and HAV sequences; and preferably include RGD sequences, YIGSR sequences, PDSGR sequences, LGTIPG sequences, IKVAV sequences, and HAV sequences. It is particularly preferable that such the cell adhesion signal is the RGD sequences. It is more preferable that such the cell adhesion signal is ERGD sequence among the RGD sequences.

With regard to the arrangement of the RGD sequences in the recombinant gelatin, the number of amino acid residues between RGDs is preferably in a range of 0 to 100, and more preferably in a range of 25 to 60. Further, it is preferable that the RGD sequences are non-uniformly arranged within such a range of the number of amino acid residues. Furthermore, it is preferable that a ratio of the number of RGD sequences to the total number of amino acid residues in the recombinant gelatin is at least 0.4%. In a case where the recombinant gelatin contains 350 or more amino acid residues, it is preferable that each of stretches of 350 amino acid residues contains at least one RGD sequence.

The recombinant gelatin preferably contains at least two RGD sequences, more preferably includes at least three RGD sequences, and still more preferably includes at least four RGD sequences, per 250 amino acid residues. However, it is preferable that the sequences of the recombinant gelatin include the following aspects: (1) an aspect in which the sequences of the recombinant gelatin do not include a serine residue and a threonine residue, (2) an aspect in which the sequences of the recombinant gelatin do not include a serine residue, a threonine residue, an asparagine residue, a tyrosine residue, and a cysteine residue, and (3) an aspect in which the sequences of the recombinant gelatin do not include an amino acid sequence represented by Asp-Arg-Gly-Asp. The recombinant gelatin may include the preferable aspects (1) to (3) of sequences independently, or may include two or more of the aspects in combination. Further, the recombinant gelatin may be partially hydrolyzed.

It is preferable that the recombinant gelatin has a repeating structure of A-[(Gly-X-Y)n]m-B. m is in a range of 2 to 10, and is preferably in a range of 3 to 5. Each of A and B represents an arbitrary amino acid or amino acid sequence. n is in a range of 3 to 100, preferably in a range of 15 to 70, and more preferably in a range of 50 to 60.

Preferably, the recombinant gelatin is represented by Formula: Gly-Ala-Pro-[(Gly-X-Y)63]3-Gly (in the formula, 63 X's each independently represent any amino acid residue, and 63 Y's each independently represent any amino acid residue. Three (Gly-X-Y)63s may be the same or different from each other.).

It is preferable that a plurality of naturally occurring collagen sequence units are bonded to the repeating unit of the recombinant gelatin. Examples of naturally occurring collagen mentioned here preferably include type I, type II, type III, type IV, and type V. The naturally occurring collagen can be more preferably type I, type II, or type III. It is preferable that examples of the origin of the collagen can include a human, a horse, a pig, a mouse, a rat, and the like, and it is more preferable that the origin of the collagen is a human.

An isoelectric point of the recombinant gelatin can be preferably in a range of 5 to 10, more preferably in a range of 6 to 10, and still more preferably in a range of 7 to 9.5.

Preferred aspects of the recombinant gelatin can include the following aspects: (1) an aspect in which a carbamoyl group is not hydrolyzed, (2) an aspect in which procollagen is not included, (3) an aspect in which telopeptide is not included, and (4) a material for substantially pure collagen prepared using a nucleic acid encoding natural collagen. The recombinant gelatin may include the preferred aspects (1) to (4) independently, or may include two or more of the aspects in combination.

The recombinant gelatin can be preferably set to any one of the following (A) to (C) on the basis of the degree of (bone) tissue repair ability.
(A) Polypeptide that is represented by the following SEQ ID NO: 1,
(B) Polypeptide that includes partial sequences having a sequence identity of 80% or more with a partial amino acid sequence consisting of 4th to 192nd amino acid residues in the amino acid sequence of (A) and has (bone) tissue repair ability, and
(C) Polypeptide that consists of an amino acid sequence in which one or several amino acid residues are deleted, substituted, or added to the amino acid sequence of (A) and has (bone) tissue repair ability.

The sequence identity of (B) can be more preferably 90% or more and still more preferably 95% or more from the viewpoint of the (bone) tissue repair ability of the recombinant gelatin.

The partial amino acid sequence of the sequence of (B) is a partial amino acid sequence corresponding to a repeating unit of the sequence represented by SEQ ID NO: 1. In a case where a plurality of partial amino acid sequences corresponding to the repeating unit are present in the polypeptide of (B), the polypeptide can include one, preferably two or more repeating units having a sequence identity of 80% or more.

Further, it is preferable that the polypeptide defined in (B) includes partial sequences having a sequence identity of 80% or more with the partial amino acid sequence corresponding to the repeating unit by 80% or more of the number of all amino acid residues as the total number of amino acid residues.

The length of the polypeptide defined in (B) can be the number of amino acid residues of 151 to 2260; is preferably the number of amino acid residues of 193 or more from the viewpoint of degradability after crosslinking and the number of amino acid residues of 944 or less from the viewpoint of stability; and is more preferably the number of amino acid residues of 380 to 756.

Further, the polypeptide defined in (C) may be a polypeptide that consists of an amino acid sequence in which one or several amino acid residues are deleted, substituted, or added to the amino acid sequence of (A) and has tissue repair ability.

One or several amino acid residues may be deleted, substituted, or added in the polypeptide defined in (C). Although varying depending on the total number of amino acid residues of the recombinant gelatin, the number of amino acid residues deleted, substituted, or added in the polypeptide defined in (C) can be, for example, in a range of 2 to 15 and preferably in a range of 2 to 5.

The recombinant gelatin can be manufactured by gene recombination techniques publicly known to those skilled in the art, and can be manufactured according to methods disclosed in, for example, EP1014176A, US6992172A, WO2004/85473A, WO2008/103041A, and the like. Specifically, a gene encoding an amino acid sequence of recombinant gelatin set in advance is acquired, this gene is incorporated into an expression vector to prepare a recombinant expression vector, and this recombinant expression vector is introduced into an appropriate host to prepare a transformant. The obtained transformant is cultured in an appropriate medium, so that recombinant gelatin is produced. Accordingly, in a case where the recombinant gelatin produced from a culture is recovered, the recombinant gelatin used in the present disclosure can be prepared.

### (Polymer aqueous solution)

The polymer aqueous solution includes one or more types of polymers. The concentration of the polymers in the polymer aqueous solution is preferably 0.1% by mass or more, more preferably 1% by mass or more, and particularly preferably 5% by mass or more. In a case where the concentration of polymers in the polymer aqueous solution is lower than 0.1% by mass, it is difficult to maintain the structure of a polymer porous body after removing water. It is preferable that the polymer aqueous solution gels at a temperature equal to or higher than a freezing temperature. An upper limit of the concentration of the polymers in the polymer aqueous solution is not particularly limited as long as a polymer can be dissolved, and is generally 40% by mass or less or may be 30% by mass or less or 20% by mass or less.

In a case where a solution including polymers is purified and concentrated or dried polymers are dissolved in an aqueous medium, a polymer aqueous solution is prepared. (1) An polymer aqueous solution may be adjusted, or (2) a polymer aqueous solution adjusted in advance may be prepared and used. (3) A polymer aqueous solution obtained from purification and concentration may be freeze-dried, an aqueous medium may be added to an obtained freeze-dried body, and the freeze-dried body is redissolved to adjust the polymer aqueous solution. Alternatively, (4) a polymer aqueous solution obtained from purification and concentration may be frozen and an obtained frozen body may be thawed to adjust the polymer aqueous solution. It is preferable that the frozen body is thawed at a temperature of 30°C to 40°C for 15 to 20 hours from the viewpoint of reducing the generation of air bubbles and insolubles (unthawed residues of the frozen body). The method of (4) is preferable from the viewpoint of reducing the time and effort required to adjust a polymer aqueous solution, the convenience of transport and storage, and reducing air bubbles and insolubles in the polymer aqueous solution.

It is preferable that air bubbles and insolubles dispersed in the polymer aqueous solution are removed before a freezing step by operations, such as filtration, centrifugation, decompression, and defoaming. Accordingly, a yield of a polymer aqueous solution-frozen body having low anisotropy is improved. The removal of air bubbles and insolubles can be evaluated from the measurement of turbidity. Alternatively, the removal of air bubbles and insolubles can also be evaluated from visual inspection using an optical microscope. For example, the number of air bubbles and unnecessary substances appearing in the visual field of an optical microscope is calculated, and the removal of air bubbles and insolubles can be evaluated from the number of air bubbles and insolubles in 1 µL of the polymer aqueous solution. The number of air bubbles or insolubles in the polymer aqueous solution is preferably 0.5 pieces/µL or less, more preferably 0.3 pieces/µL or less, still more preferably 0.1 pieces/µL or less, and particularly preferably 0 piece/µL.

Components other than the polymers may be added to the polymer aqueous solution for the purpose of adding predetermined properties. Examples of such other components include components related to bone regeneration or new bone formation, such as a bone-inducing agent. Examples of the bone-inducing agent include a bone formation factor (BMP) and a basic fibroblast growth factor (bFGF), but the bone-inducing agent is not particularly limited. In addition, examples of the bone-inducing agent can include a crosslinking agent for a polypeptide or protein.

The aqueous medium of the polymer aqueous solution is not particularly limited as long as the aqueous medium can dissolve a polymer and can be used for biological tissue. Examples of the aqueous medium of the polymer aqueous solution can include those generally usable in the field of the art, such as water, saline, and a phosphate buffer solution.

In a case where gelatin is used as the polymer, the concentration of gelatin in a gelatin solution is not particularly limited as long as the gelatin can be dissolved. The concentration of the gelatin in the gelatin solution is, for example, preferably in a range of 0.5% by mass to 20% by mass, more preferably in a range of 2% by mass to 16% by mass, and still more preferably in a range of 4% by mass to 12% by mass. Further, the gelatin solution may be defoamed before the freezing step. Accordingly, it is possible to make ice crystals likely to be formed uniformly. A defoaming method is not particularly limited, and for example, vacuum centrifugal defoaming can be performed at a pressure of 2 to 10 kPa.

The gelatin solution may be filtered for the removal of undissolved particles. A filtration method is not particularly limited, and, for example, pressure filtration is performed using a filter having a pore diameter of 0.22 to 0.45 µm. A material of the filter is also not particularly limited, and polytetrafluoroethylene, polyethersulfone, cellulose acetate, polyvinylidene fluoride, or the like can be used. However, cellulose acetate is preferable from the viewpoint of low gelatin adsorbability and a small amount of eluate. A temperature at the time of preparing the gelatin solution is not particularly limited, and may be a commonly used temperature, for example, about 0°C to 60°C and preferably about 3°C to 40°C.

### (Liquid container)

The liquid container is a container in which the polymer aqueous solution is put and which is used to cool and freeze the polymer aqueous solution. Examples of the shape of the container include the shape of a dish and the shape of a cylindrical cup. The shape of a cylindrical cup is preferable. It is preferable that the inside of the container does not have a high curvature. Specifically, the curvature of the inside of the container is preferably R1 mm or more and more preferably R2 mm or more (R means a curvature radius). The size of the container is not particularly limited. In a case where the container is a cylindrical cup-shaped container, an inner diameter of the container is preferably 200 mm or less and more preferably 150 mm or less.

An inner surface of the liquid container may be coated with a member (coating member) that is the same as or different from a member forming the liquid container. Further, a cover member consisting of the member that is the same as or different from the member forming the liquid container is spread on the inner surface of the liquid container or a cylindrical cover member may be installed. The member forming the liquid container is also referred to as a main member of the liquid container to be distinguished from the coating member and the cover member. A combination of the main member, the coating member, and the cover member of the liquid container is not limited. That is, the liquid container may be formed of any combination of (1) only the main member of the liquid container, (2) the main member and the coating member of the liquid container, (3) the main member and the cover member of the liquid container, and (4) the main member, the coating member, and the cover member of the liquid container.

The inner surface of the liquid container, that is, a surface that is in contact with the polymer aqueous solution in a case where the polymer aqueous solution is put in the liquid container is made of a copolymer of tetrafluoroethylene and hexafluoropropylene (also referred to as a perfluoroethylene propene copolymer) (FEP). For example, according to (1) to (4), (1) the main member of the liquid container is made of FEP, (2) at least the coating member is made of FEP, (3) at least the cover member is made of FEP, and (4) at least the cover member is made of FEP.

A material of the main member of the liquid container is not particularly limited, and examples of the material of the main member include aluminum. In a case where the main member of the liquid container is to be in contact with the polymer aqueous solution, the main member of the liquid container is made of FEP. A coefficient of linear expansion (also referred to as a coefficient of thermal expansion) of the material of the main member of the liquid container is preferably 10×10⁻⁵/K or less, more preferably 50×10⁻⁶/K or less, and particularly preferably 25×10⁻⁶/K or less.

The cover member may be uniformly spread on the inner surface of the container, and the shape and the thickness of the cover member are not limited. In a case where the cover member is to be in contact with the polymer aqueous solution, the cover member is made of FEP. The inner surface of the container may be uniformly coated with the coating member, and the thickness of a coating film is not limited. The coating film is preferably 20 µm or more and more preferably 50 µm or more. In a case where the coating member is to be in contact with the polymer aqueous solution, the coating member is made of FEP.

### (Freezing step)

A step of freezing the polymer aqueous solution stored in the liquid container (hereinafter, referred to as a "freezing step") is performed. Accordingly, a polymer aqueous solution-frozen body can be obtained. Freezing means is not particularly limited, and the polymer aqueous solution may be frozen by a device, such as a refrigerator or a freeze dryer. In a case where the polymer aqueous solution is frozen by a freeze dryer, water can be continuously removed from the polymer aqueous solution-frozen body (the polymer aqueous solution-frozen body can be continuously freeze-dried) by the same device.

A temperature in the freezing step varies depending on the type of the polymer or the concentration of the polymer aqueous solution, and it is preferable that a difference between the temperature of a portion having the highest solution temperature in the solution immediately before the generation of the heat of solidification and the temperature of a portion having the lowest solution temperature in the solution is 2.5°C or less. Here, "a temperature difference immediately before the generation of the heat of solidification" means a temperature difference in a case where the temperature difference is largest between 1 second and 10 seconds before the generation of the heat of solidification. Further, the temperature of a portion having the lowest solution temperature in the solution is preferably -8°C or less and -15°C or more and more preferably -10°C or less and -15°C or more.

### (Water removal step)

A step of removing water from the polymer aqueous solution-frozen body (hereinafter, referred to as a "water removal step") is performed. Accordingly, a polymer porous body can be obtained. Means for removing water is not particularly limited, examples of the means for removing water include a method of melting ice in the polymer aqueous solution-frozen body, a method of subliming the ice (freeze-drying the polymer aqueous solution-frozen body), and the like, and freeze-drying is preferable. The freeze-drying can be performed, for example, for 0.5 hours to 300 hours. There is no particular limitation on the freeze dryer that can be used.

### (Pulverization step)

In a pulverization step, the polymer porous body is pulverized to obtain a pulverized material. For the pulverization, a pulverizer, such as a hammer mill or a screen mill, can be used. From the viewpoint of small variation in particle diameter distribution between tests, a screen mill (for example, Comil manufactured by Quadro Engineering) is preferable since this screen mill makes it possible to collect materials pulverized in the same size as needed. In order to maintain the structure of the surface of the pulverized material, a cutting method is more preferable than a crushing method as the condition of pulverization. Further, in order to maintain the internal structure of the granules, it is preferable to adopt a method in which the granules are not strongly compressed during pulverization.

### (Classification step)

After the pulverization step, a classification step can be included to adjust a particle diameter. Accordingly, it is possible to obtain a pulverized material of a polymer having a uniform particle diameter. For example, it is preferable that a sieve having an opening size of 300 µm to 1400 µm is used for the classification of pulverized materials of gelatin.

### (Hopper)

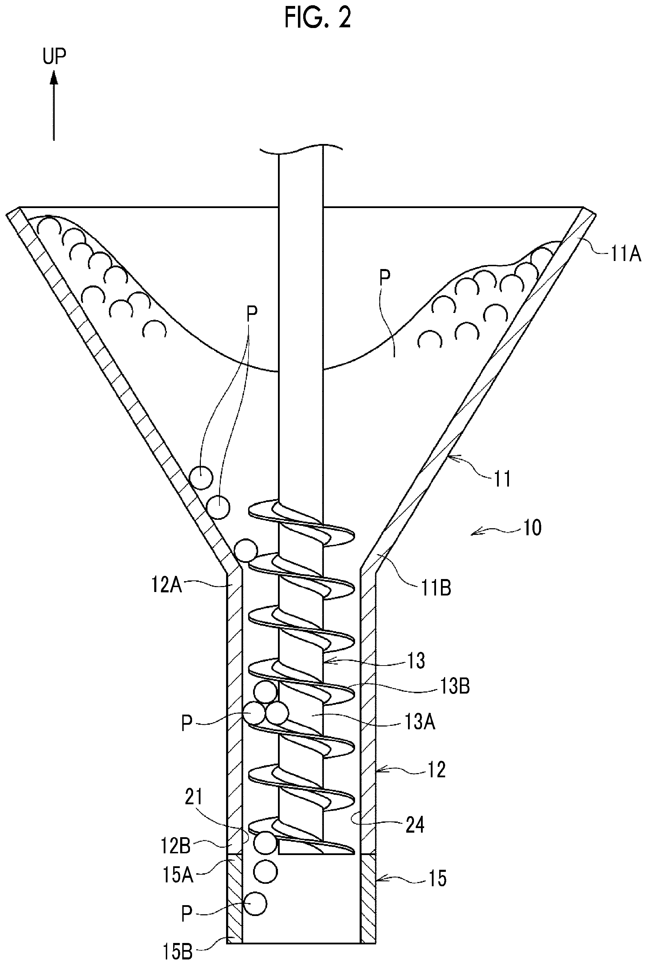

As shown in Figs. 1 and 2, the hopper 11 has, for example, the shape of a cone of which an inner diameter is gradually reduced from an upper end portion 11A toward a lower end portion 11B in the vertical direction. The upper end portion 11A of the hopper 11 is open and powder P is put in the hopper 11 from the upper end portion 11A of the hopper 11. An opening is formed at the lower end portion 11B of the hopper 11 and the chute 12 is connected to the lower end portion 11B of the hopper 11.

### (Chute)

As shown in Figs. 1 and 2, the chute 12 is a tubular member extending in an axial direction. For example, the chute 12 has a cylindrical shape. One end portion 12A of the chute 12 in the axial direction is connected to the lower end portion 11B of the hopper 11. For example, the chute 12 is disposed along the vertical direction, and one end portion 12A, which is provided on the upper side of the chute 12, is connected to the lower end portion 11B of the hopper 11. Accordingly, the powder P put in the hopper 11 is supplied to the chute 12. Here, one end portion 12A is an example of one end of the chute 12 and the lower end portion 11B is an example of a lower end of the hopper 11.

A discharge port 21 through which the powder P supplied from the hopper 11 to the chute 12 is discharged is provided at the other end portion 12B of the chute 12 in the axial direction. Since the chute 12 is disposed along the vertical direction in the first embodiment, the powder P is discharged from the discharge port 21 provided at the other end portion 12B that is provided on the lower side of the chute 12. Here, the other end portion 12B is an example of an opposite end of the chute 12. The material of the chute 12 is, for example, metal. The strip-shaped portions 25 (see Figs. 4 and 5) provided on the inner wall surface 24 of the chute 12 will be described later.

### (Auger screw and drive unit)

As shown in Figs. 1 to 3, the auger screw 13 comprises a shaft portion 13A and a helical blade 13B that protrudes outward from the shaft portion 13A in a radial direction. A part of the shaft portion 13A in the axial direction is disposed in the chute 12 along the axial direction of the chute 12. Since the axial direction of the chute 12 coincides with the vertical direction in the first embodiment, the shaft portion 13A is also disposed along the vertical direction.

The shaft portion 13A of the auger screw 13 is disposed over the chute 12 and the hopper 11. Further, in this example, a lower end of the auger screw 13 is housed in the chute 12 and the auger screw 13 is not provided in the nozzle 15. An upper end portion of the shaft portion 13A extends up to the vicinity of the upper end portion 11A of the hopper 11, and the drive unit 14 is provided at the upper end portion of the shaft portion 13A. The blade 13B is provided in a certain range of the shaft portion 13A. An inclination angle and a surface shape of the helical blade 13B, a pitch of the helical blade 13B in the axial direction, and a rotation direction of the shaft portion 13A are set such that the powder P is transported toward the discharge port 21 in a case where the blade 13B is rotated about an axis.

The drive unit 14 is a motor that rotates the shaft portion 13A of the auger screw 13 and rotationally drives the auger screw 13. In a case where the auger screw 13 is rotated, the powder P present in the chute 12 is transported toward the discharge port 21.

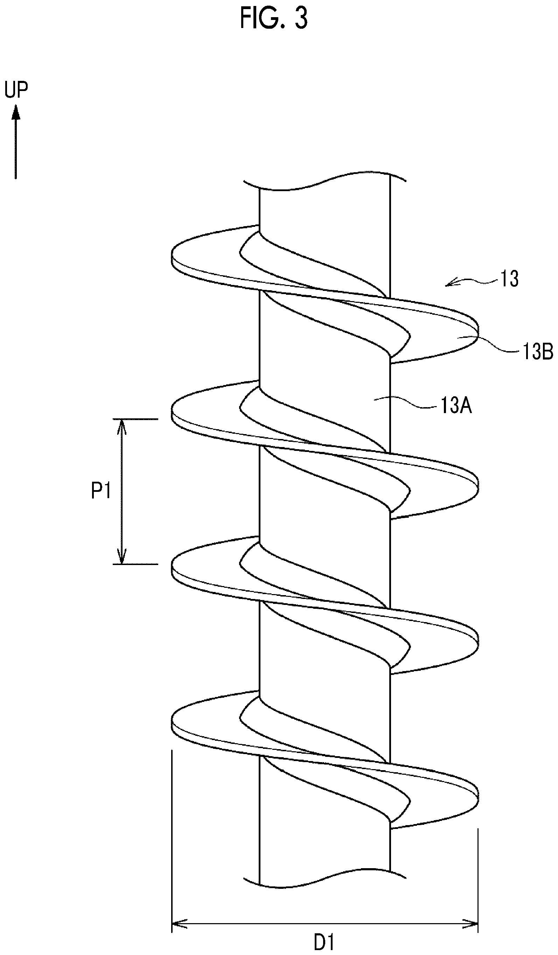

A gap between a distal end of the blade 13B of the auger screw 13 and the inner wall surface 24 of the chute 12 is preferably equal to or less than the average particle diameter of the powder P, more preferably equal to or more than 0.1 times and equal to or less than 0.5 times the average particle diameter of the powder P, and still more preferably equal to or more than 0.1 times and equal to or less than 0.4 times the average particle diameter of the powder P. The distal end of the blade 13B of the auger screw 13 is a portion corresponding to an outer edge of the auger screw 13 shown in Fig. 3 in a direction of a diameter D. For example, the gap between the distal end of the blade 13B of the auger screw 13 and the inner wall surface 24 of the chute 12 is 0.4 times the average particle diameter of the powder P of the powder P.

A pitch P1 of the helical blade 13B of the auger screw 13 (a pitch P1 shown in Fig. 3) is preferably equal to or less than 5 times the average particle diameter of the powder P, more preferably equal to or less than 4 times the average particle diameter of the powder P, and still more preferably equal to or less than 3 times the average particle diameter of the powder P. The pitch P1 of the helical blade 13B of the auger screw 13 is a distance between adjacent portions of the blade 13B. For example, the pitch P1 of the helical blade 13B of the auger screw 13 is set to 3 times the average particle diameter of the powder P.

The frictional resistance of the surface of the blade 13B of the auger screw 13 can be set to be lower than the frictional resistance of the inner wall surface 24 of the chute 12. For example, surface treatment for changing the magnitude of friction against the powder P is performed on at least one of the auger screw 13 or the inner wall surface 24 of the chute 12 as a configuration that changes the frictional resistance of the surface of the blade 13B of the auger screw 13. As the surface treatment, for example, polishing treatment for reducing the surface roughness of the auger screw 13 may be performed or surface coating may be performed on at least one of the auger screw 13 or the inner wall surface 24 of the chute 12. Diamond-like carbon (DLC) coating, intrinsic carbon film (ICF) coating, fluororesin coating, or the like is used as the surface coating. Further, a configuration that changes the frictional resistance of the surface of the blade 13B of the auger screw 13 may be realized by the selection of a material of the auger screw 13 or the chute 12.

### (Nozzle)

As shown in Figs. 1 and 2, the nozzle 15 has a tubular shape and extends such that an axial direction of the nozzle 15 extends in the vertical direction. For example, the nozzle 15 has a cylindrical shape. An upper end portion 15A of the nozzle 15 in the axial direction is connected to the discharge port 21 provided at the other end portion 12B of the chute 12. An opening is formed at a lower end portion 15B of the nozzle 15 in the axial direction. Accordingly, the powder P discharged from the discharge port 21 of the chute 12 is discharged from the lower end portion 15B of the nozzle 15 through the nozzle 15.

It is preferable that a material of the nozzle 15 is a material less likely to cause electrostatic induction with respect to the powder P than the material of the chute 12. The surface resistivity of the material of the nozzle 15 is preferably 10⁵ Ω or more, more preferably 10⁸ Ω or more, and still more preferably 10¹¹ Ω or more.

For example, a resin, ceramic, or the like is used as the material of the nozzle 15. For example, the nozzle 15 is made of a resin and the surface resistivity of the nozzle 15 is 10¹¹ Ω or more.

In a case where surface coating is performed on the nozzle 15, it is preferable that a material for the surface coating is a material less likely to cause electrostatic induction with respect to the powder P than the material of the chute 12. The surface resistivity of the material for the surface coating is preferably 10⁵ Ω or more, more preferably 10⁸ Ω or more, and still more preferably 10¹¹ Ω or more. For example, diamond-like carbon (DLC) coating, intrinsic carbon film (ICF) coating, or the like is used as the surface coating.

### (Container)

As shown in Fig. 1, an upper portion of the container 16 is open and is disposed below the nozzle 15. Accordingly, the container 16 is filled with the powder P discharged from the nozzle 15.

### (Measuring unit)

The measuring unit 17 comprises a body part 17A, and a saucer 17B which is disposed on an upper portion of the body part 17A and on which the container 16 is placed. The body part 17A measures the mass of the container 16 placed on the saucer 17B and the powder P to measure the amount of powder P with which the container 16 is filled.

### (Controller)

The controller 18 is electrically connected to the measuring unit 17, and the amount of filling powder P output from the measuring unit 17 is input to the controller 18. Further, the controller 18 is electrically connected to the drive unit 14, and controls the drive unit 14 according to the amount of filling powder P to control the rotation of the auger screw 13. In the powder supply device 10, for example, a measured value obtained during filling, which is output from the measuring unit 17, is fed back to the controller 18 and the rotational speed of the auger screw 13 is reduced on the basis of the measured value or the stop timing of the auger screw 13 is controlled on the basis of the measured value.

### (Strip-shaped portion)

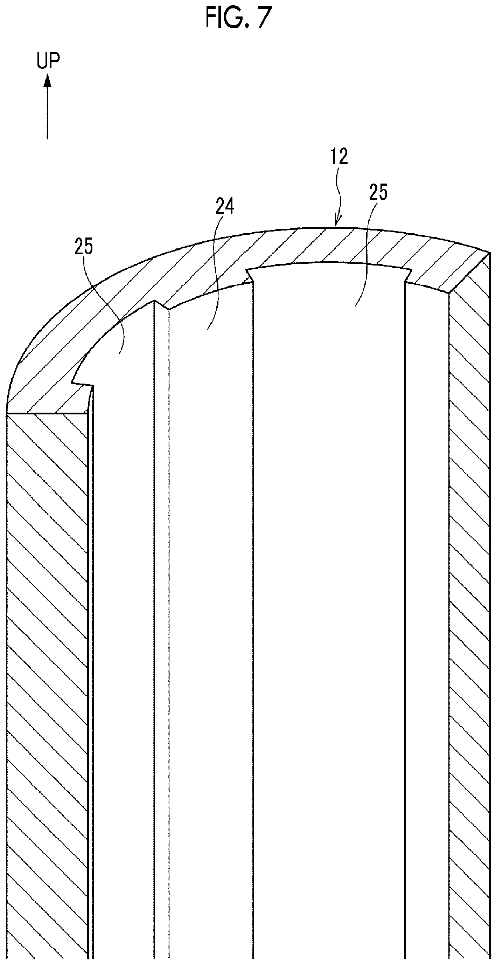

As shown in Figs. 4 to 7, strip-shaped portions 25 having an elongated recessed or protruding shape are provided on the inner wall surface 24 of the chute 12. Each strip-shaped portion 25 of this example is a recessed groove portion that is recessed from the inner wall surface 24 of the chute 12. A longitudinal direction of the strip-shaped portion 25 extends in a direction intersecting with at least a part of the blade 13B of the auger screw 13 (see Fig. 4). For example, the strip-shaped portions 25 are provided along the axial direction of the chute 12. More specifically, each strip-shaped portion 25 of this example is a linear strip-shaped portion and the longitudinal direction of the linear strip-shaped portion 25 extends in parallel to the axial direction of the chute 12.

In the first embodiment, a plurality of (for example, five) strip-shaped portions 25 are provided on the inner wall surface 24 of the chute 12 and all the plurality of strip-shaped portions 25 are formed of recessed groove portions. Further, the plurality of strip-shaped portions 25 are provided over the entire area of the chute 12 in the axial direction. Furthermore, all the plurality of strip-shaped portions 25 are linear strip-shaped portions.

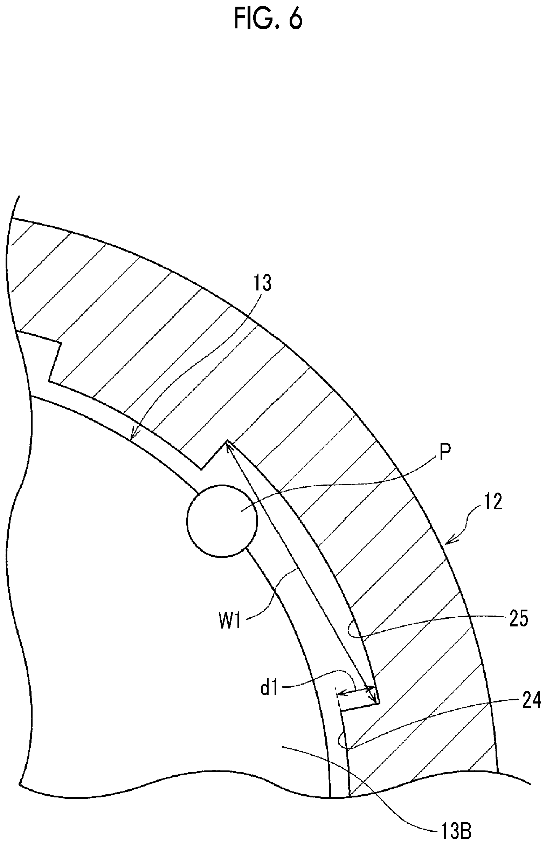

In a case where the strip-shaped portions 25 are recessed groove portions, a depth d1 of the strip-shaped portion 25 from the inner wall surface 24 shown in Fig. 6 is preferably equal to or less than the average particle diameter of the powder P, more preferably equal to or more than 0.1 times and equal to or less than 0.5 times the average particle diameter of the powder P, and still more preferably equal to or more than 0.1 times and equal to or less than 0.3 times the average particle diameter of the powder P. For example, the depth d1 of the strip-shaped portion 25 from the inner wall surface 24 is set to 0.2 times the average particle diameter of the powder P.

In a case where the strip-shaped portions 25 are recessed groove portions, a width w1 of the strip-shaped portion 25 in a direction orthogonal to the longitudinal direction of the strip-shaped portion 25 shown in Fig. 6 is preferably equal to or more than the average particle diameter of the powder P, more preferably equal to or more than 2 times the average particle diameter of the powder P, and still more preferably equal to or more than 3 times the average particle diameter of the powder P. In the first embodiment, the width w1 of the strip-shaped portion 25 in a direction orthogonal to the longitudinal direction of the strip-shaped portion 25 is a width of the strip-shaped portion 25 in a circumferential direction of the chute 12. For example, the width w1 of the strip-shaped portion 25 in a direction orthogonal to the longitudinal direction of the strip-shaped portion 25 is set to 4 times the average particle diameter of the powder P. Accordingly, a part of the powder P is likely to enter the recessed strip-shaped portions 25.

Drawings are schematic diagrams shown so that a technique is easily understood, and dimensions of the respective portions shown in the drawings, for example, dimensions, such as the average particle diameter of the powder P, the width w1 and the depth d1 of the strip-shaped portion 25, the arrangement pitch of the strip-shaped portions 25, and the pitch P1 of the blade 13B, are not accurate.

### (Actions and effects)

Next, the actions and effects of the present embodiment will be described.

As shown in Fig. 1, in the powder supply device 10, the powder P stored in the hopper 11 is supplied to the chute 12 from the lower end portion 11B of the hopper 11. Since the auger screw 13 comprising the helical blade 13B is provided in the chute 12, the powder P is transported toward the discharge port 21 of the chute 12 in a case where the auger screw 13 is rotationally driven by the drive unit 14. The nozzle 15 is connected to the discharge port 21 of the chute 12. Accordingly, the powder P passes through the nozzle 15 from the discharge port 21 of the chute 12 and is discharged from the lower end portion 15B of the nozzle 15.

Since the container 16 is provided below the nozzle 15 in the powder supply device 10, the container 16 is filled with the powder P discharged from the lower end portion 15B of the nozzle 15. The amount of powder P with which the container 16 is filled is measured by the measuring unit 17. The controller 18 controls the drive unit 14 according to the amount of filling powder P measured by the measuring unit 17, so that the rotational speed of the auger screw 13 is reduced or the rotation of the auger screw 13 is stopped. Accordingly, the container 16 can be filled with a target amount of filling powder P.

As described above, in the powder supply device 10, the strip-shaped portions 25 (recessed groove portions in this example) having an elongated recessed or protruding shape are provided on the inner wall surface 24 of the chute 12. Since such strip-shaped portions 25 are provided, uneven portions are formed on the inner wall surface 24 in the circumferential direction. The longitudinal direction of the strip-shaped portion 25 extends in a direction intersecting with at least a part of the helical blade 13B of the auger screw 13. Further, the powder P may be rotated together with the auger screw 13 in the chute 12 in a state where the powder P is attracted to the blade 13B of the auger screw 13 by being charged with static electricity. In a case where the strip-shaped portions 25 of which the longitudinal direction extends in a direction intersecting with the blade 13B are provided on the inner wall surface 24 of the chute 12 even in this case, the powder P attracted to the blade 13B of the auger screw 13 is caught by the uneven portions formed by the strip-shaped portions 25. As a result, the attraction of the powder P to the blade 13B caused by charging is likely to be eliminated.

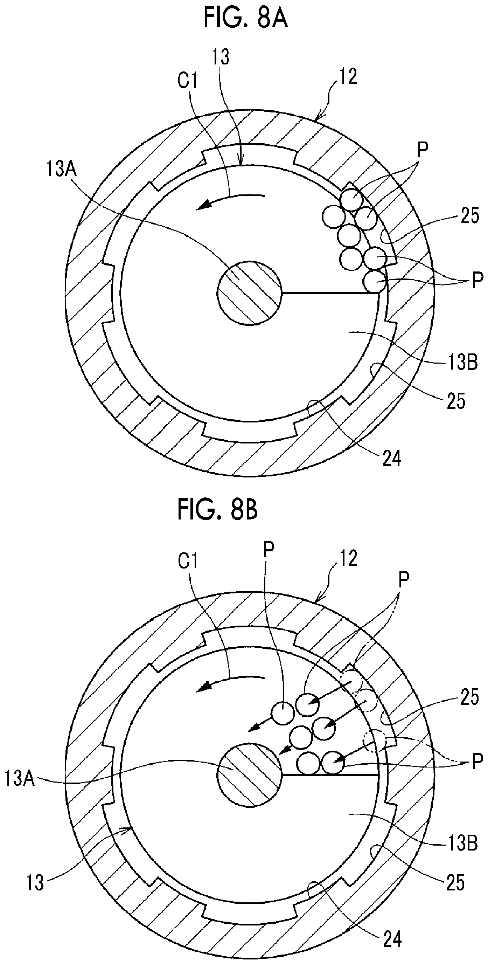

More specifically, as shown in Fig. 8A, the powder P, which is attracted to the vicinity of the outer periphery of the blade 13B of the auger screw 13 due to charging, is in contact with the inner wall surface 24 of the chute 12. At this time, in a case where the auger screw 13 is rotated in a direction of an arrow C1 as shown in Fig. 8B, the powder P attracted to the vicinity of the outer periphery of the blade 13B is caught by the uneven portions of the inner wall surface 24 formed by the strip-shaped portions 25. Accordingly, an external force exceeding an adsorption force caused by charging is applied to the powder P, so that the attraction of the powder P to the blade 13B caused by charging is eliminated by this external force. Therefore, the powder P can be moved with respect to the blade 13B. Further, adjacent particles of the powder P collide with each other, and the attraction of the powder P on the inner peripheral side caused by charging is also eliminated by an external force applied due to the collision.

Accordingly, the co-rotation of the powder P and the auger screw 13 in which the powder P is rotated together with the blade 13B in a state where the powder P is attracted to the blade 13B is suppressed. In a case where the co-rotation of the powder P and the auger screw 13 is suppressed, the powder P is likely to be moved toward the discharge port 21 along the inclination of the blade 13B due to the action of a gravitational force and the stay of the powder P in the chute 12 is suppressed. For this reason, the amount of powder P transported per unit time can be stabilized in the powder supply device 10 as compared to the related art where there is no strip-shaped portion of which the longitudinal direction extends in a direction intersecting with the blade of the auger screw.

Further, the plurality of strip-shaped portions 25 are provided on the inner wall surface 24 of the chute 12 in the powder supply device 10. For this reason, since the powder P is likely to be caught by the strip-shaped portions 25 in the powder supply device 10 as compared to a case where one strip-shaped portion is provided, the co-rotation of the auger screw 13 and the powder P can be further suppressed.

Furthermore, in the powder supply device 10, the plurality of strip-shaped portions 25 include at least one of recessed groove portions or protruding ridge portions. Accordingly, since uneven portions by which the powder P is caught are formed on the inner wall surface 24, a co-rotation suppressing effect can be obtained. In the first embodiment, the plurality of strip-shaped portions 25 are formed of recessed groove portions. Since the strip-shaped portions 25 are formed of one type of recessed groove portions, the strip-shaped portions 25 are easily manufactured as compared to a case where the strip-shaped portions 25 include plural types of portions. The strip-shaped portions 25 may be formed of only protruding groove portions. Of course, the strip-shaped portions 25 may include recessed groove portions and protruding ridge portions. As described above, the shape of the strip-shaped portion 25 can be appropriately selected in consideration of the ease of manufacture, the material of the chute, the particle diameter of powder, a co-rotation suppressing effect, and the like.

Moreover, in the powder supply device 10, the strip-shaped portions 25 are provided along the axial direction of the chute 12. Since the blade 13B of the auger screw 13 has a helical shape, a locus, which is obtained in a case where an image of the distal end of the blade 13B is projected onto the inner wall surface 24, extends in a direction intersecting with the axial direction of the chute 12 as viewed locally. For this reason, for example, as compared to a case where strip-shaped portions 25 are provided in a direction intersecting with the axial direction as with a direction orthogonal to the axial direction of the chute 12, the powder P, which is rotated together with the blade 13B in a state where the powder P is absorbed to the surface of the blade 13B, is likely to be caught by the strip-shaped portions 25. Accordingly, a co-rotation suppressing effect can be further improved.

Further, the fact that the strip-shaped portions 25 are provided along the axial direction of the chute 12 means that the longitudinal direction of the strip-shaped portion 25 is along the axial direction. In this case, one strip-shaped portion 25 and a plurality of blades 13B, which are arranged at the pitch P1, are likely to intersect with each other. As a result, since one strip-shaped portion 25 can be caused to take charge of a co-rotation suppressing effect for the plurality of blades 13B, the number of strip-shaped portions 25 required to obtain the same co-rotation suppressing effect can be reduced, so that manufacturing suitability is also good.

Furthermore, in the powder supply device 10, the strip-shaped portions 25 are provided over the entire area of the chute 12 in the axial direction. For this reason, since the powder P is likely to be caught by the strip-shaped portions 25 at any location on the chute 12 in the axial direction in the powder supply device 10 as compared to a case where the strip-shaped portions are provided at a part of the chute in the axial direction, a co-rotation suppressing effect is high.

Moreover, the strip-shaped portions 25 are linear strip-shaped portions in the powder supply device 10. In a case where the strip-shaped portions 25 have a linear shape, it is easy to manufacture the strip-shaped portions 25 as compared to a case where the strip-shaped portions 25 have a curved shape. Meanwhile, the strip-shaped portions 25 may have a curved shape. In a case where the strip-shaped portions 25 have a curved shape, fine adjustment for improving a co-rotation suppressing effect, such as the appropriate adjustment of an intersection angle between the strip-shaped portion 25 and the blade 13B, can be performed.

Further, in a case where the strip-shaped portions 25 are recessed groove portions in the powder supply device 10, the depth d1 (see Fig. 6) of the strip-shaped portion 25 is equal to or more than 0.1 times and equal to or less than 0.5 times the average particle diameter of the powder P. For this reason, in the powder supply device 10, the powder P is likely to be caught by the side walls of the strip-shaped portions 25 as compared to a case where the depth of the strip-shaped portion is smaller than 0.1 times the average particle diameter of the powder. Furthermore, the stay of the powder P in the strip-shaped portions 25 is suppressed as compared to a case where the depth of the strip-shaped portion is larger than 0.5 times the average particle diameter of the powder.

Furthermore, in a case where the strip-shaped portions 25 are recessed groove portions in the powder supply device 10, the width w1 (see Fig. 6) of the strip-shaped portion 25 in a direction orthogonal to the longitudinal direction of the strip-shaped portion 25 is equal to or more than 2 times the average particle diameter of the powder P. For this reason, in the powder supply device 10, the powder P is likely to be caught by the side walls of the strip-shaped portions 25 as compared to a case where the width of the strip-shaped portion in a direction orthogonal to the longitudinal direction of the strip-shaped portion is smaller than 2 times the average particle diameter of the powder.

Moreover, the powder supply device 10 is provided with the tubular nozzle 15 that is connected to the discharge port 21 of the chute 12. The material of the nozzle 15 or a material for the surface coating of the nozzle 15 is a material that is less likely to cause electrostatic induction with respect to the powder P than the material of the chute 12. For example, since the strip-shaped portions 25 are provided on the inner wall surface 24 of the chute 12, the amount of charged powder P is increased and there is a possibility that the powder P is attracted to the vicinity of the lower end portion of the chute 12 due to electrostatic induction. In this case, since the material of the nozzle 15 or a material for the surface coating of the nozzle 15 is formed of a material that is less likely to cause electrostatic induction, the powder P is less likely to be attracted to the nozzle 15 and the irregular drop of the powder P from the nozzle 15 is suppressed.

Further, in the powder supply device 10, the surface resistivity of the material of the nozzle 15 or a material for the surface coating of the nozzle 15 is 10⁵ Ω or more. For this reason, in the powder supply device 10, the powder P is less likely to be attracted to the nozzle 15 and the irregular drop of the powder P from the nozzle 15 is suppressed as compared to a case where the surface resistivity of the nozzle or the surface coating is lower than 10⁵ Ω.

Furthermore, in the powder supply device 10, the frictional resistance of the surface of the blade 13B of the auger screw 13 can be set to be lower than the frictional resistance of the inner wall surface 24 of the chute 12. For this reason, since the powder P can be made to be more likely to be attracted to the inner wall surface 24 of the chute 12 than the auger screw 13 in the powder supply device 10, the co-rotation of the powder P and the auger screw 13 is suppressed. In a case where a co-rotation suppressing effect caused by frictional resistance is sufficient, the strip-shaped portions to be provided on the inner wall surface 24 of the chute 12 may not be provided.

Moreover, the powder supply device 10 comprises the drive unit 14 that rotationally drives the auger screw 13, the measuring unit 17 that measures the amount of powder P with which the container 16 is filled, and the controller 18 that controls the drive unit 14 according to the amount of filling powder P measured by the measuring unit 17. For this reason, since the amount of filling powder P is measured by the measuring unit 17 in the powder supply device 10, the accuracy of the amount of filling powder P is improved.

Further, the powder supply device 10 is adapted such that a measured value of the powder P obtained during filling, which is output from the measuring unit 17, is fed back to the controller 18 to reduce the rotational speed of the auger screw 13 or to stop the auger screw 13. For this reason, the accuracy of the amount of powder P with which the container 16 is filled is improved in the powder supply device 10.

### [Second Embodiment]

Next, a powder supply device according to a second embodiment will be described. In a case where the second embodiment includes the same components, members, and the like as those of the first embodiment, the components, members, and the like will be denoted by the same reference numerals as the reference numerals used in the first embodiment and the detailed description thereof will be omitted.

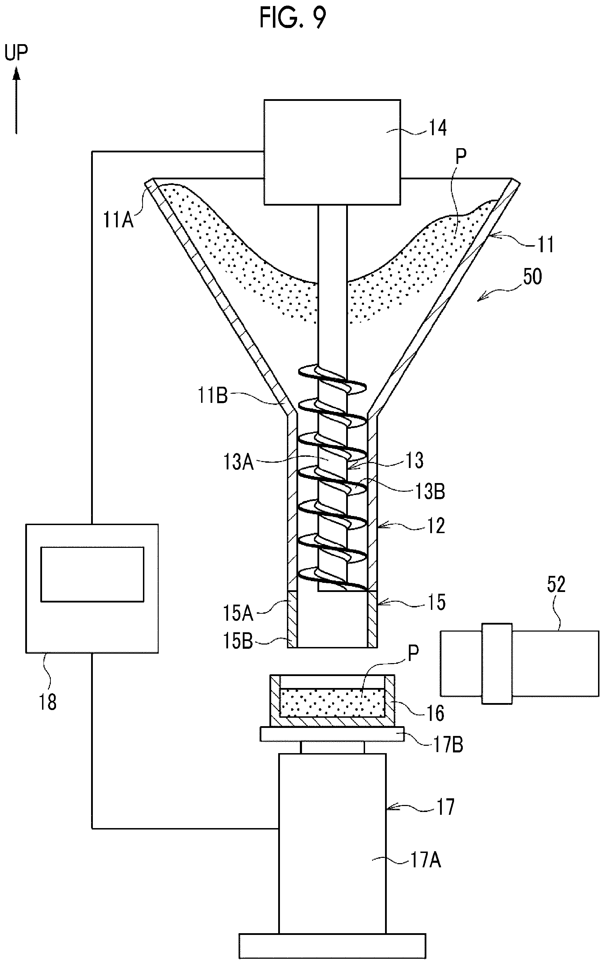

Fig. 9 shows the configuration of the powder supply device 50 according to the second embodiment. As shown in Fig. 9, the powder supply device 50 comprises a static eliminator 52 that eliminates static electricity from the nozzle 15. The static eliminator 52 is disposed at a position facing the nozzle 15 with an interval between the static eliminator 52 and the nozzle 15. The static eliminator 52 applies ions via, for example, corona discharge and eliminates static electricity from the nozzle 15 using electric charges that have ions having a polarity opposite to the polarity of ions of electric charges of the nozzle 15.

Configuration other than the above-mentioned configuration is the same as that of the powder supply device 10 according to the first embodiment.

In the powder supply device 50 according to the second embodiment, the following effect is obtained in addition to the effects obtained from the same configuration as the configuration of the powder supply device 10 according to the first embodiment.

The powder supply device 50 comprises the static eliminator 52 that eliminates static electricity from the nozzle 15. For this reason, since static electricity is eliminated from the nozzle 15 by the static eliminator 52 in the powder supply device 50, the powder P is less likely to be attracted to the nozzle 15 and the irregular drop of the powder P from the nozzle 15 is suppressed.

### [Third Embodiment]

Next, a powder supply device according to a third embodiment will be described. In a case where the third embodiment includes the same components, members, and the like as those of the first and second embodiments, the components, members, and the like will be denoted by the same reference numerals as the reference numerals used in the first and second embodiments and the detailed description thereof will be omitted.

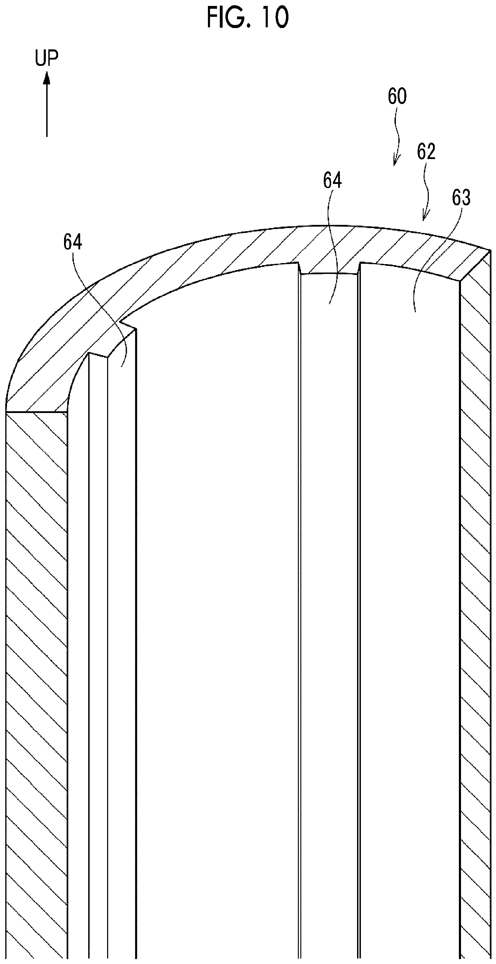

Fig. 10 shows a part of the configuration of a tubular chute 62 used in the powder supply device 60 according to the third embodiment. As shown in Fig. 10, strip-shaped portions 64 having an elongated protruding shape are provided on an inner wall surface 63 of the chute 62. The strip-shaped portions 64 are disposed along an axial direction of the chute 62. Each strip-shaped portion 64 has a linear shape, and a longitudinal direction of the strip-shaped portion 64 extends in a direction intersecting with at least a part of the blade (not shown) of the auger screw. A plurality of strip-shaped portions 64 are provided. For example, the plurality of strip-shaped portions 64 are formed of protruding ridge portions. The strip-shaped portions 64 are provided over the entire area of the chute 62 in the axial direction.

Configuration other than the above-mentioned configuration is the same as that of the powder supply device 10 according to the first embodiment.

In the powder supply device 60 according to the third embodiment, the same effects can be obtained from the same configuration as the configuration of the powder supply device 10 according to the first embodiment.

### [Fourth Embodiment]

Next, a powder supply device according to a fourth embodiment will be described. In a case where the fourth embodiment includes the same components, members, and the like as those of the first to third embodiments, the components, members, and the like will be denoted by the same reference numerals as the reference numerals used in the first to third embodiments and the detailed description thereof will be omitted.

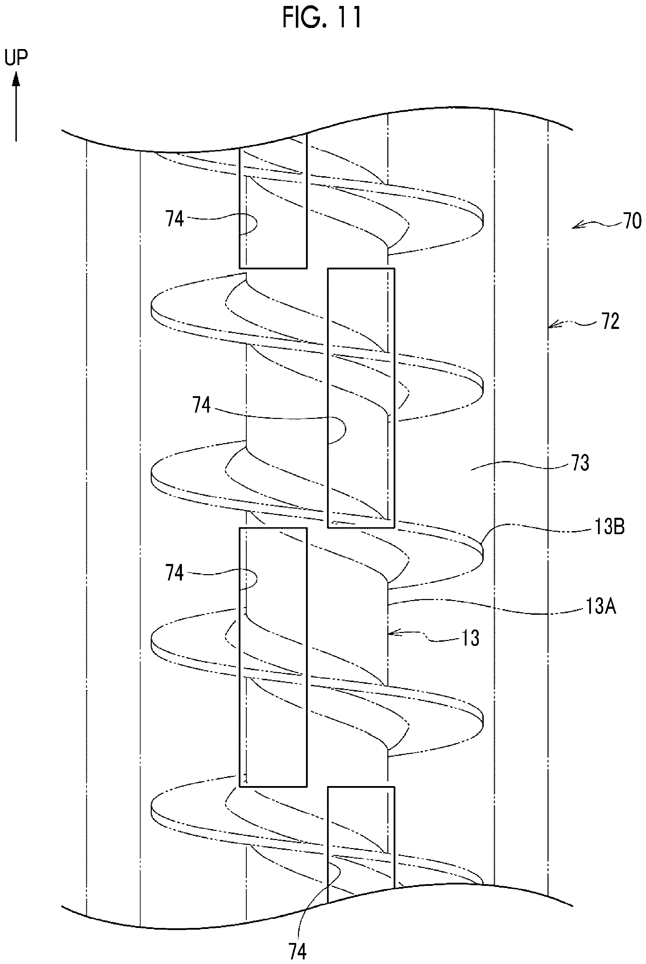

Fig. 11 shows a part of the configuration of a tubular chute 72 and an auger screw 13 used in the powder supply device 70 according to the fourth embodiment. As shown in Fig. 11, a plurality of strip-shaped portions 74 having an elongated recessed or protruding shape are provided on an inner wall surface 73 of the chute 72. Each of the plurality of strip-shaped portions 74 has a length shorter than the entire length of the chute 72 in an axial direction, and the plurality of strip-shaped portions 74 are arranged along the axial direction of the chute 72 at intervals. Further, the plurality of strip-shaped portions 74 arranged along the axial direction are arranged in a plurality of rows in a circumferential direction of the inner wall surface 73 of the chute 72. Each strip-shaped portion 74 has a linear shape, and a longitudinal direction of the strip-shaped portion 74 extends in a direction intersecting with at least a part of the blade (not shown) of the auger screw.

As described above, the plurality of rows in which the plurality of strip-shaped portions 74 are arranged along the axial direction of the chute 72 at intervals are arranged in the circumferential direction of the inner wall surface 73. Further, in an example shown in Fig. 11, each strip-shaped portion 74 of the other row is disposed between two strip-shaped portions 74 of each of adjacent rows. That is, the positions of the plurality of strip-shaped portions 74 of the respective rows in the axial direction are shifted from each other by a half pitch. In a case where the respective rows are viewed as a whole, it can also be said that the plurality of strip-shaped portions 74 are arranged in a so-called zigzag pattern. Accordingly, the chute 72 is adapted such that a portion in which the strip-shaped portions 74 are not arranged is not formed over the entire area of the chute 72 in the axial direction.

Further, each strip-shaped portion 74 is formed of a recessed groove portion recessed from the inner wall surface 73 of the chute 72, but may be a protruding ridge portion protruding from the inner wall surface 73 of the chute 72.

Configuration other than the above-mentioned configuration is the same as that of the powder supply device 10 according to the first embodiment.

In the powder supply device 70 according to the fourth embodiment, the same effects can be obtained from the same configuration as the configuration of the powder supply device 10 according to the first embodiment.

### [Fifth Embodiment]

Next, a powder supply device according to a fifth embodiment will be described. In a case where the fifth embodiment includes the same components, members, and the like as those of the first to fourth embodiments, the components, members, and the like will be denoted by the same reference numerals as the reference numerals used in the first to fourth embodiments and the detailed description thereof will be omitted.

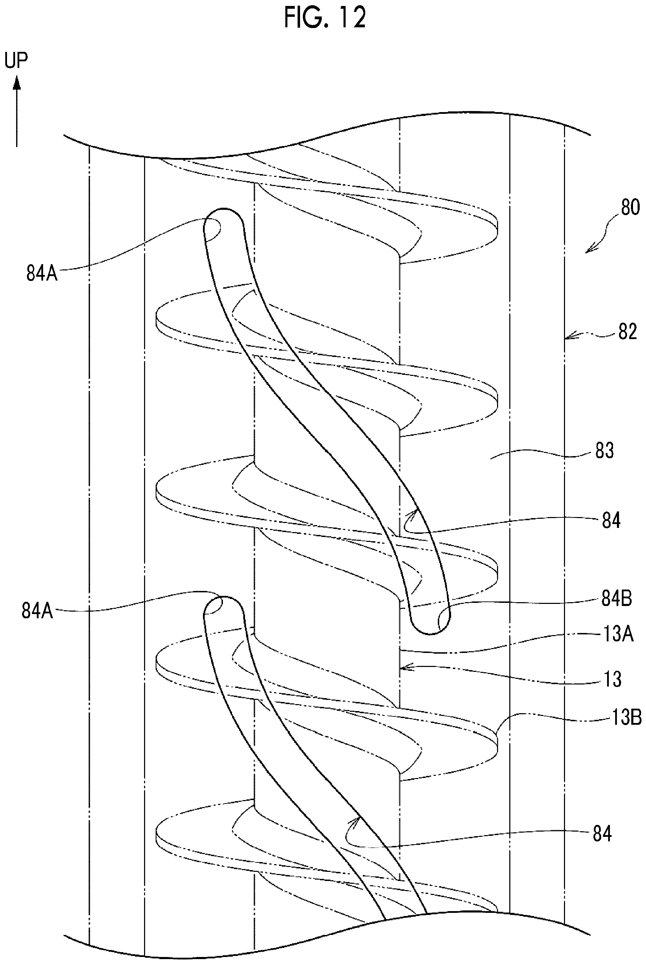

Fig. 12 shows a part of the configuration of a tubular chute 82 and an auger screw 13 used in the powder supply device 80 according to the fifth embodiment. As shown in Fig. 12, a strip-shaped portion 84 having an elongated recessed or protruding shape is provided on an inner wall surface 83 of the chute 82. The strip-shaped portion 84 is divided into a plurality of strip-shaped portions along an axial direction of the chute 82. The strip-shaped portion 84 of this example has a curved shape. A longitudinal direction of the strip-shaped portion 84 extends in a direction intersecting with at least a part of the blade (not shown) of the auger screw.

For example, longitudinal directions of the plurality of strip-shaped portions 84 are bent in a direction intersecting with the axial direction of the chute 82. A lower end portion 84B of one strip-shaped portion 84 is bent to one side (right side in Fig. 12) of an upper end portion 84A in a circumferential direction of the chute 82, and an upper end portion 84A of another strip-shaped portion 84 positioned below the strip-shaped portion 84 is disposed on the other side (left side in Fig. 12) of the lower end portion 84B of the strip-shaped portion 84 in the circumferential direction of the chute 82. Accordingly, the chute 82 is adapted such that a portion in which the strip-shaped portions 84 are not arranged is not formed over the entire area of the chute 82 in the axial direction.

Configuration other than the above-mentioned configuration is the same as that of the powder supply device 10 according to the first embodiment.

In the powder supply device 80 according to the fifth embodiment, the same effects can be obtained from the same configuration as the configuration of the powder supply device 10 according to the first embodiment.

### [Others]

In the first to fifth embodiments, the groove portion and the ridge portion are generally distinguished from each other depending on the width of the strip-shaped portion in the circumferential direction of the chute. For example, the strip-shaped portion is the groove portion in a case where the width of the strip-shaped portion in the circumferential direction of the chute is large, and the strip-shaped portion is the ridge portion in a case where the width of the strip-shaped portion in the circumferential direction of the chute is small. Further, both groove portions and ridge portions may be provided in addition to an aspect in which one of groove portions or ridge portions are provided on the inner wall surface of the chute. That is, the plurality of strip-shaped portions may be formed of only groove portions, may be formed of only ridge portions, or may include both groove portions and ridge portions. Further, groove portions and ridge portions having the same width in the circumferential direction may be alternately arranged on the inner wall surface of the chute. Furthermore, the plurality of strip-shaped portions may include strip-shaped portions having a linear shape and strip-shaped portions having a curved shape.

The axial direction of the chute extends in the vertical direction in the first to fifth embodiments, but this configuration can be changed. For example, the chute may be disposed such that the axial direction of the chute is a direction (for example, an oblique direction or a horizontal direction) intersecting with the vertical direction.

In the first to fifth embodiments, the shapes of the hopper, the auger screw, and the nozzle of the powder supply device can be changed. Further, the nozzle may not be provided.

### [Examples]

Next, the powder supply device according to the embodiment of the present disclosure will be more specifically described using Examples. The powder supply device according to the embodiment of the present disclosure is not limited to the following examples as long as the powder supply device departs from the gist of the present disclosure.

### (Adjustment of powder P)

The powder P as a sample was adjusted as follows.

The following recombinant peptide CBE3 (disclosed in WO2008/103041A) was prepared as the recombinant gelatin.
CBE3 molecular weight: 51.6 kD structure: GAP[(GXY)63]3G
Number of amino acids: 571 pieces
RGD sequence: 12 pieces
Imino acid content: 33%
Almost 100% of amino acids have a repeating structure of GXY. The amino acid sequence of CBE3 does not include a serine residue, a threonine residue, an asparagine residue, a tyrosine residue, and a cysteine residue. CBE3 includes an ERGD sequence.

A ratio of hydrophilic repeating units in a polymer having an isoelectric point of 9.34 is 26.1%.

### Amino acid sequence (SEQ ID NO: 1)

A solution containing the recombinant gelatin was purified and then concentrated by ultrafiltration up to 4.0% by mass at a temperature of 30°C. After the obtained gelatin aqueous solution was freeze-dried, water for injection was added to a freeze-dried body, the temperature of the freeze-dried body was raised up to 37°C for 30 minutes, and the freeze-dried body was redissolved to obtain 7.5% by mass of a gelatin aqueous solution again. This gelatin aqueous solution was filtered using a cellulose acetate film filter of 0.22 µm, and was subjected to vacuum centrifugal defoaming for 180 seconds at a pressure of 4.0 kPa using a vacuum defoaming machine (Kurashiki Spinning Co., Ltd., KK-V300SS-I). About 20 g of this gelatin aqueous solution was poured into a cylindrical cup-shaped container that was made of an aluminum alloy (A5056), had an inner diameter of 104 mm and a bottom thickness of 5 mm, and included an inner periphery of the bottom chamfered by R2 mm and an inner surface coated with FEP (Nippon Fusso Co., Ltd., NF-004A). Then, 14 lumps of the gelatin aqueous solution were placed on an aluminum plate, which was precooled to about -35°C and had a size of 350×634×20 mm, via a glass plate having a thickness of 1 mm, were covered with a lid, and were left for 1 hour to obtain frozen gelatin frozen bodies.

The gelatin frozen bodies were freeze-dried using a freeze dryer (ULVAC, DFR-5N-B) to remove water, so that polymer porous bodies (freeze-dried bodies) were prepared. The polymer porous bodies were pulverized using a screen of 0.079 inches and then a screen of 0.040 inches (1 inch is about 2.45 cm) by a screen pulverizer (Quadro, Comil U10). Polymer porous bodies, which passed through a sieve having an opening size of 1400 µm and did not pass through a sieve having an opening size of 300 µm, were obtained and were used as powder P.

Conditions for the powder P as a sample are as follows. The average particle diameter of the powder P is about 1 mm. The bulk density of the powder P is in a range of 0.16 to 0.2 g/cm³. Further, the powder P has a property to be easily charged.

Experimental conditions are as follows. A target amount (mass) of filling powder P is 100 mg. Further, experiments were performed about the presence or absence of groove portions as strip-shaped portions on an inner wall surface of a chute and the presence or absence of a tubular nozzle at a distal end of the chute, as the configuration of the powder supply device. As shown in Fig. 9, the static eliminator 52 that eliminates static electricity from the nozzle 15, the measuring unit 17, and the controller 18 are provided as specifications of the powder supply device. The nozzle 15 is made of a resin and the surface resistivity of the nozzle 15 is 10¹¹ Ω or more.

In a case where groove portions are not provided on the chute, the inner diameter of the inner wall surface of the chute is φ8.6 mm.

In a case where groove portions are provided on the inner wall surface of the chute, the groove portions are formed in a linear shape along the axial direction of the chute and provided over the entire area of the chute in the axial direction. The inner diameter of the inner wall surface (a portion other than the groove portion) of the chute is φ8.6 mm, and the inner diameter of the chute between the groove portions (the inner diameter between portions in which the groove portions are formed) is φ9.0 mm. A depth of the groove portion from the inner wall surface of the chute is 0.2 mm. Further, the width of the groove portion in the circumferential direction of the chute is 4 mm, and a width of the inner wall surface between two adjacent groove portions in the circumferential direction of the chute is 2 mm. The number of the groove portions is four.

The pitch P1 of the blade of the auger screw was set to 3.0 mm, and a gap between the distal end of the blade of the auger screw (the diameter of the auger screw) and the inner wall surface of the chute was set to 0.3 mm. Further, the rotational speed of the auger screw was controlled in two stages of 120 revolutions per minute (rpm) at a high speed and 9 revolutions per minute (rpm) at a low speed.

The accuracy of the amount of filling powder P and a filling time for the powder P were evaluated in the experiments. Evaluation criteria are as follows. Here, σ denotes a standard deviation of data (probability distribution). Here, the standard deviation is one of indexes that represent the degree of dispersion (variation) of data or a random variable from an average value. The standard deviation is obtained from an equation of "a positive square root of a value obtained by dividing the sum of squares of a difference between a value of each data and an average by the total number n of data".
(a) High accuracy: 3σ of the amount of filling powder is small.
(b) Time stability: a time is short and σ is small.

Evaluation results of the accuracy of the amount of filling powder P and a filling time for the powder P are shown in Table 1.

**[Table 1]**

| | | Without groove | With groove |
|---|---|---|---|
| Without nozzle | Accuracy | ±4.3(3σ, mg) | ±3.2(3σ, mg) |
| | Time | 9.2±1.6(sec.) | 6.4±1.0(sec.) |
| With nozzle | Accuracy | ±4.4(3σ, mg) | ±2.8(3σ, mg) |
| | Time | 9.5±2.1(sec.) | 6.6±0.9(sec.) |

As shown in Table 1, in a case where groove portions are provided on the inner wall surface of the chute, it can be confirmed that the filling accuracy of the powder P is improved and a filling time can be shortened and stabilized. Further, in a case where groove portions are provided on the inner wall surface of the chute and the nozzle is mounted, it can be confirmed that the filling accuracy of the powder P is further improved.

### [Supplementary description]

In each of the above-mentioned embodiments, various processors to be described below can be used as the hardware structures of processing units, which perform various types of processing, such as the controller 18. The various processors include a programmable logic device (PLD) that is a processor of which the circuit configuration can be changed after manufacture, such as a field programmable gate array (FPGA), and a dedicated electrical circuit that is a processor having a circuit configuration designed exclusively to perform specific processing, such as an application specific integrated circuit (ASIC), and the like in addition to a CPU that is a general-purpose processor functioning as various processing units by executing software as described above.

One processing unit may be formed of one of these various processors, or may be formed of a combination of two or more processors of the same type or different types (for example, a combination of a plurality of FPGAs and/or a combination of a CPU and an FPGA). Further, a plurality of processing units may be formed of one processor.

As an example where a plurality of processing units are formed of one processor, there is an aspect where one processor is formed of a combination of one or more CPUs and software and functions as a plurality of processing units. Second, there is an aspect where a processor realizing the functions of the entire system, which includes a plurality of processing units, by one integrated circuit (IC) chip as typified by System On Chip (SoC) or the like is used. In this way, various processing units are formed using one or more of the above-mentioned various processors as hardware structures.

In addition, more specifically, electrical circuitry where circuit elements, such as semiconductor elements, are combined can be used as the hardware structures of these various processors.

From the above description, it is possible to ascertain techniques described in the following supplementary claims.

### [Supplementary claim 1]

A powder supply device comprising:
a hopper that stores powder;
a tubular chute that extends in an axial direction, includes one end connected to a lower end of the hopper, and discharges the powder supplied from the hopper from a discharge port provided at an opposite end thereof; and
an auger screw that is rotatably provided in the chute and includes a helical blade for transporting the powder toward the discharge port,
wherein friction of an inner wall surface of the chute is higher than friction of the auger screw.

### [Supplementary claim 2]

A powder supply method of supplying powder using a powder supply device, the powder supply device including a hopper that stores powder, a tubular chute that extends in an axial direction, includes one end connected to a lower end of the hopper, and discharges the powder supplied from the hopper from a discharge port provided at an opposite end thereof, an auger screw that is rotatably provided in the chute and includes a helical blade for transporting the powder toward the discharge port, and at least one strip-shaped portion which is provided on an inner wall surface of the chute and has an elongated recessed or protruding shape and of which a longitudinal direction extends in a direction intersecting with at least a part of the blade.

### [Supplementary claim 3]

A powder supply method comprising:
a step of storing powder in a hopper;
a step of supplying the powder from the hopper to a tubular chute connected to a lower end of the hopper; and
a step of transporting the powder supplied to an inside of the chute toward a discharge port of the chute by rotating the auger screw including a helical blade,
wherein the step of transporting the powder includes a step of eliminating attraction of the powder to the blade, which is caused by charging, by at least one strip-shaped portion which is provided on an inner wall surface of the chute and has an elongated recessed or protruding shape and of which a longitudinal direction extends in a direction intersecting with at least a part of the blade.

The examples of the present disclosure have been described above, but it goes without saying that the present disclosure is not limited to the above-mentioned examples at all and can be embodied in various aspects without departing from the scope of the present disclosure.

The entire content of the present disclosure of Japanese Patent Application No. 2021-054137, filed March 26, 2021, is incorporated in this specification by reference.

All documents, patent applications, and technical standards disclosed in this specification are incorporated in this specification by reference such that the incorporation of each of the documents, the patent applications, and the technical standards by reference is specific and is as detailed as each of the documents, the patent applications, and the technical standards.

[Sequence listing] International application 21F00273W1JP22012437_1.app based on International Patent Cooperation Treaty

## Claims

1. A powder supply device comprising:
a hopper that stores powder;
a tubular chute that extends in an axial direction, includes one end connected to a lower end of the hopper, and discharges the powder supplied from the hopper from a discharge port provided at an opposite end thereof;
an auger screw that is rotatably provided in the chute and includes a helical blade for transporting the powder toward the discharge port; and
at least one strip-shaped portion which is provided on an inner wall surface of the chute and has an elongated recessed or protruding shape and of which a longitudinal direction extends in a direction intersecting with at least a part of the blade.

2. The powder supply device according to claim 1,
wherein a plurality of the strip-shaped portions are provided.

3. The powder supply device according to claim 1 or 2,
wherein the plurality of strip-shaped portions include at least one of recessed groove portions or protruding ridge portions.

4. The powder supply device according to any one of claims 1 to 3,
wherein the strip-shaped portion is provided along the axial direction of the chute.

5. The powder supply device according to any one of claims 1 to 4,
wherein the at least one strip-shaped portion is provided over an entire area of the chute in the axial direction.

6. The powder supply device according to any one of claims 1 to 5,
wherein the strip-shaped portion includes at least one of a linear strip-shaped portion or a curved strip-shaped portion.

7. The powder supply device according to any one of claims 1 to 6,
wherein in a case where the strip-shaped portion is a recessed groove portion, a depth of the groove portion is equal to or more than 0.1 times and equal to or less than 0.5 times an average particle diameter of the powder.

8. The powder supply device according to any one of claims 1 to 7,
wherein in a case where the strip-shaped portion is a recessed groove portion, a width of the groove portion in a direction orthogonal to a longitudinal direction of the groove portion is equal to or more than 2 times an average particle diameter of the powder.

9. The powder supply device according to any one of claims 1 to 8, further comprising:
a tubular nozzle that is connected to the discharge port of the chute,
wherein a material of the nozzle or a material for surface coating of the nozzle is a material that is less likely to cause electrostatic induction with respect to the powder than a material of the chute.

10. The powder supply device according to claim 9,
wherein surface resistivity of the material of the nozzle or the material for the surface coating is 10⁵ Ω or more.

11. The powder supply device according to claim 9 or 10, further comprising:
a static eliminator that eliminates static electricity from the nozzle.

12. The powder supply device according to any one of claims 1 to 11,
wherein frictional resistance of a surface of the blade of the auger screw is lower than frictional resistance of the inner wall surface of the chute.

13. The powder supply device according to any one of claims 1 to 12, further comprising:
a drive unit that rotationally drives the auger screw;
a measuring unit that measures an amount of the powder which is discharged from the discharge port and with which a container is filled; and
a controller that controls the drive unit according to the amount of the filling powder measured by the measuring unit.

14. The powder supply device according to claim 13,
wherein a measured value obtained during filling, which is output from the measuring unit, is fed back to the controller and a rotational speed of the auger screw is reduced or the auger screw is stopped.
